# EUROPEAN PATENT SPECIFICATION

(11) **EP 4 722 644 B1**
(45) Date of publication and mention of the grant of the patent: **02.12.2026**
(21) Application number: 24204090.5
(22) Date of filing: 02.10.2024
(51) Int. Cl.: G01B 15/02, G01N 23/083, G01N 23/16

(54) **APPARATUS FOR INSPECTING A COATED ELECTRODE SHEET FOR A SECONDARY BATTERY AND METHOD USING THE SAME**
VORRICHTUNG ZUR INSPEKTION EINER BESCHICHTETEN ELEKTRODENFOLIE FÜR EINE SEKUNDÄRBATTERIE UND VERFAHREN ZUR VERWENDUNG DAVON
APPAREIL D'INSPECTION D'UNE FEUILLE D'ÉLECTRODE REVÊTUE POUR UNE BATTERIE SECONDAIRE ET PROCÉDÉ L'UTILISANT

(43) Date of publication of application: 08.04.2026
(73) Proprietor: LG Energy Solution, Ltd., Seoul 07335 (KR)
(72) Inventor: LEE, Gyu Sun, 34122 Daejeon (KR); HONG, Jong Hyuk, 34122 Daejeon (KR); CHOI, Jin Hyeong, 34122 Daejeon (KR)
(74) Representative: BCKIP Part mbB

(56) References cited:
- EP-A1- 4 411 354
- JP-A- 2007 051 978
- US-A1- 2022 305 516

## Description

### TECHNICAL FIELD

The present invention relates to an apparatus for inspecting a coated electrode sheet for a secondary battery, as well as a method for inspecting a coated electrode sheet for a secondary battery.

More particularly, the present invention relates to an apparatus and a method for inspecting a thickness of a coated electrode sheet for a secondary battery, which can reduce the frequency of maintenance of the inspection apparatus.

### BACKGROUND

Secondary batteries, or often called rechargeable batteries, can be discharged by being used and then restored to their original state by charging. Secondary batteries have recently been widely used as an energy source of wireless devices, such as a personal digital devices, mobile telephone, or notebook computer. Moreover, the secondary battery has attracted attention as an energy source of an electric vehicle, a hybrid electric vehicle, and the like, which are regarded as a solution to the air pollution problem caused by traditional gasoline or diesel vehicles using fossil fuel. Due to the apparent advantages of the secondary battery over other traditional energy sources, the application of secondary battery continuously becomes wider and the consumer's demands for the secondary battery is also increasing.

Among various secondary batteries, a lithium secondary battery is particularly widely used as an energy source for various electronic products because the lithium secondary battery shows a high energy density, a high operating voltage, as well as excellent storage and lifetime characteristics.

In the meantime, secondary batteries can be also classified depending on the shape of a battery case. For example, they may be classified into cylindrical or prismatic batteries, according to which an electrode assembly is embedded in a cylindrical or prismatic metal can. Furthermore, in case of pouch-type batteries, the electrode assembly is embedded in a pouch-type case of an aluminum laminate sheet.

The electrode assembly, embedded in the battery case, functions as a power generating element capable of charging and discharging. The electrode assembly comprises a positive electrode, a negative electrode, and a separator interposed between the positive and the negative electrodes.

A positive electrode and a negative electrode, which constitute an electrode assembly, are manufactured by coating an electrode sheet with an electrode slurry, which is prepared in a mixing process in a predetermined pattern and with a constant thickness through a slot die, and then drying the electrode slurry. The thickness of so-manufactured coated electrode sheet is gauged before drying the coated electrode sheet by an inspection apparatus.

After use of the inspection apparatus for a prolonged period of time, the accuracy of the thickness inspection by the inspection apparatus may drop for various reasons. The document EP4411354 A1 discloses an inspection apparatus for a coated electrode of a secondary battery according to the state of the art.

Accordingly, it would be advantageous to develop a technology capable of addressing the above technical problem.

### SUMMARY OF THE INVENTION

It is an objective of the present invention to provide an improved inspection means for an electrode assembly. The problem is at least partially solved or alleviated by the subject-matter of independent claims, wherein further examples are incorporated in dependent claims.

One aspect of the present invention relates to an apparatus for inspecting a coated electrode sheet for a secondary battery. The apparatus may comprise a radiation emitting part configured to emit an x-ray or a beta ray towards the coated electrode sheet and a radiation detecting part, disposed opposite the radiation emitting part so as to have the coated electrode sheet positioned therebetween, wherein the radiation detecting part may be configured to detect an amount of the x-ray or the beta ray emitted by the radiation emitting part and transmitted through the coated electrode sheet, to thereby gauge the thickness of the coating. The apparatus may further comprise a first protective layer disposed between the coated electrode sheet and one of the radiation emitting and the radiation detecting parts facing the coated electrode sheet and a controller configured to relatively move the first protective layer parallel to said surface facing the coated electrode sheet, either at a predetermined constant speed or periodically by a preset length.

The present invention enables more accurate gauging of the thickness of a coating on the coated electrode sheet by preventing contamination from foreign materials. In addition, the present invention enables automatic replacement of a contaminated protective layer per predetermined duration of time so that gauging of the thickness of a coating on the coated electrode sheet is not affected by manual maintenance.

The coated electrode sheet may have a structure in which an electrode mixture layer is coated on one side or both sides of a current collector layer. The electrode mixture layer may be a slurry containing an active material, a binder, and a solvent, wherein the binder helps to hold the active material particles together and adhere them to the current collector layer. The current collector layer may be a thin metal foil designed to conduct electric current between an electrochemical active material and an external circuit of the battery. For example, an aluminum layer may be is used for the positive current collector, while a copper layer may be used for the negative current collector. The electrode mixture layer may be coated onto the current collector layer to the desired thickness in the desired area. The coated portion may be positioned in the middle of the electrode sheet along its width, and the uncoated portion may be positioned, e.g., at both sides of the coated portions.

The radiation emitting part may comprise radiation emitting means such as an x-ray of a beta ray. The x-ray or the beta ray may be used for gaging the thickness of the coated electrode sheet, because the method using the x-ray or the beta ray has advantages in that it is a non-contact and non-destructive method preserving the integrity of the target material. Thus, the method can be used for gaging the thickness of undried coated material. An x-ray tube or an x-ray generator may be used for x-ray emitting part, and Strontium-90 (Sr-90) or Krypton-85 (Kr-85) may be used for beta ray source material. For the radiation detecting part, a scintillation detector or a semiconductor detector may be used for a x-ray detector, and a Geiger-Müller tube or a scintillation detector may be used for a beta ray detector. The radiation emitting part and the radiation detecting part may be arranged in parallel with the two surfaces of the radiation emitting part and the radiation detecting part facing each other. However, the present invention is not limited thereto. The radiation emitting part or the radiation detecting part may be inclined with respect to the surface of the coated electrode sheet. While the coated electrode sheet passes, a predetermined amount of radiation is emitted from the radiation emitting part. Once the radiation passes through the electrode sheet, its intensity gets reduced. The change of radiation intensity may be different depending on the thickness of the electrode sheet at the position the radiation has passed the electrode sheet. The inspection apparatus is configured for gauging a thickness of the coating on the electrode sheet by measuring the intensity of the radiation transmitted through the coated electrode sheet at various positions thereof, and then converting the intensities obtained from various inspection positions to corresponding thicknesses of the coating at those positions on the electrode sheet.

The first protective layer enables to reduce or prevent inaccurate thickness inspection resulting from a foreign material deposited on the inspection apparatus. Since, during the inspection, the electrode slurry on the electrode sheet is still undried, foreign material particles of the electrode slurry may fall off from the electrode sheet and attach to the surface of the inspection apparatus. Particularly, if the foreign material particles are deposited on the surface of the radiation emitting part and the radiation detecting part through which the radiation is either emitted or received, the contamination may cause inaccurate thickness inspection of the coated electrode sheet. In other words, if a foreign material is deposited on a surface of the radiation emitting part through which the radiation is emitted towards the electrode sheet, or a surface of the radiation detecting part through which the radiation emitted by the radiation emitting part and transmitted through the electrode sheet is received, the intensity of the radiation transmitted through such contaminated positions would be reduced compared to other uncontaminated positions, due to the existence of the foreign material. The first protective layer may be a flat, thin sheet allowing it to be easily wound or unwound.

According to an embodiment of the present invention, the apparatus may further include a first roll from which the first protective layer is unwound and supplied between the coated electrode sheet and said one of the radiation emitting and detecting parts.

Accordingly, the present invention provides a simple and compact configuration allowing a periodic or continued, constant supply of the first protective layer.

According to an embodiment of the present invention, the first roll may be provided in a form of a foil roll. The apparatus may then comprise a first start foil roll positioned at one side of the radiation emitting and detecting parts, upstream of the movement of the coated electrode sheet to the inspection area. The apparatus may further be provided with a first end foil roll position at the other side of the radiation emitting and detecting parts, downstream of the movement of the coated electrode sheet from the inspection area. The first protective layer may be unwound from the first start foil roll and subsequently wound onto the first end foil roll, to thereby facilitate the supply of the first protective layer along the moving direction of the coated electrode sheet.

According to an embodiment of the present invention, the apparatus may further include a second protective layer disposed between the coated electrode sheet and the other one of the radiation emitting and detecting parts to cover a surface of the other one of the radiation emitting and detecting parts facing the coated electrode sheet. The controller may be configured to relatively move the second protective layer parallel to said surface of the other one of the radiation emitting and detecting parts facing the coated electrode sheet, either at a predetermined constant speed or periodically by a preset distance.

Accordingly, the present invention enables preventing the radiation emitting and/or the radiation detecting part from being contaminated by foreign material. The foreign material may be from undried coated electrode sheet or from dust or particles that exists in environment.

According to an embodiment of the present invention, the first protective layer may be disposed between a first surface of the coated electrode sheet and the radiation emitting or the radiation detecting part facing the first surface of the coated electrode sheet, while the second protective layer may be disposed between a second surface of the coated electrode sheet and the radiation detecting or the radiation emitting part facing the second surface of the coated electrode sheet.

According to an embodiment of the present invention, the apparatus may further include a second roll from which the second protective layer is unwound and supplied between the coated electrode sheet and the other one of the radiation emitting/detecting parts.

Accordingly, the present invention provides a simple and compact configuration allowing a periodic or continued, constant supply of the second protective layer.

According to an embodiment of the present invention, the first and/or the second protective layer may be configured to prevent said surface facing the coated electrode sheet from being exposed to a foreign material falling from the coating.

According to an embodiment of the present invention, the first and/or the second protective layer may include a polyethylene terephthalate -PET- material.

Since a protective layer made of PET material is thin, the volume of the entire roll of the protective layer may be small, thereby avoiding an undesirable size increase of the entire inspection apparatus. At the same time, the high surface energy of the PET material can allow the foreign materials captured thereon to remain stably on the surface of the protective layer.

According to an embodiment of the present invention, the first and/or the second protective layer may comprise a material transmitting x-ray or beta-ray. For example, the material of the first and/or the second protective layer may comprise a thermoplastic polymer. The material may comprise one or combination of Polyethylene Naphthalate (PEN), Polycarbonate (PC), Polyvinylidene Chloride (PVDC), Polyamide (Nylon), Polyethylene (PE), or Polylactic Acid (PLA).

According to an embodiment of the present invention, the apparatus may be configured to inspect the coated electrode sheet while the coated electrode sheet translates along longitudinal direction thereof. The controller may be configured to move the first protective layer in the direction the coated electrode sheet translates.

According to an embodiment of the present invention, the controller may be configured to move the second protective layer in the direction the coated electrode sheet translates.

According to an embodiment of the present invention, the predetermined constant speed may be between one thousandth and one ten thousandth of a moving speed of the coated electrode sheet.

A further aspect of the present invention is directed to a method for inspecting a coated electrode sheet for a secondary battery by using the apparatus. The method may include: 1) emitting, by the radiation emitting part, an x-ray or a beta ray towards the coated electrode sheet, 2) detecting, by the radiation detecting part, an amount of the x-ray or the beta ray emitted and transmitted through the coated electrode sheet, so as to gauge the thickness of the coating, and 3) relatively moving the first and/or the second protective layer parallel to said surface of the radiation emitting and/or detecting parts, either at a predetermined constant speed or periodically by a preset length.

Accordingly, the present invention enables more accurate gauging of the thickness of a coating on the coated electrode sheet by preventing contamination of the surface of emitting and/or detecting part from foreign materials. In addition, the present invention enables automatic replacement of a contaminated protective layer per predetermined duration of time so that gauging of the thickness of a coating on the coated electrode sheet is not affected by manual maintenance.

According to an embodiment of the present invention, wherein the steps 1), 2) and 3) may be performed simultaneously while the coated electrode sheet translates along a longitudinal direction thereof.

Therefore, in accordance with the present invention, since the inspection is carried out while the coated electrode sheet is moving, it is possible to continuously gauge the thickness of the coating on the coated electrode sheet at a reduced amount of time.

According to an embodiment of the present invention, the first and/or the second protective layer may move in the direction the coated electrode sheet translates.

According to an embodiment of the present invention, the first and/or the second protective layers may be moved by unrolling of the first and/or the second protective layer from the respective rolls.

Therefore, the present invention enables automatic replacement of a contaminated protective layer per predetermined duration of time.

According to some other embodiments of the present invention, the steps 1), 2) and 3) may be performed while the coated electrode sheet is still undried and prior to performing a roll-pressing step on the coated electrode sheet.

Accordingly, foreign material particles of the electrode slurry falling off from the electrode sheet can be effectively captured on the surface of the protective layer(s).

When inspecting a coated electrode sheet by using the inspection apparatus or method of the present invention, accurate gauging of a thickness of a coating on the coated electrode sheet can be achieved. Moreover, since the electrode sheet manufacturing process does not have to be frequently halted for the purpose of maintenances, a throughput of the electrode sheet manufacturing process can be increased.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: schematically illustrates an apparatus for inspecting a thickness of a coated electrode sheet in accordance with the related art;
- Fig. 2: schematically illustrates an apparatus for inspecting a thickness of a coated electrode sheet in accordance with an embodiment of the present invention;
- Fig. 3: schematically illustrates an apparatus for inspecting a thickness of a coated electrode sheet in accordance with another embodiment of the present invention, as seen from above;
- Fig. 4: schematically illustrates an apparatus for inspecting a thickness of a coated electrode sheet in accordance with yet another embodiment of the present invention, as seen from above.

### DETAILED DESCRIPTION OF EXEMPLARY EMBODIMENTS

Terms or words used in the present description and claims should not be restrictively interpreted as ordinary meanings or dictionary-based meanings, but should be interpreted as meanings and concepts consistent with the technical ideas of the present invention in the broadest possible way.

In the present disclosure, it should be understood that terms "comprises", "includes", "has", etc. specify the presence of stated features, numbers, steps, operations, elements, components, or combinations thereof, but do not preclude the presence or addition of one or more other features, numbers, steps, operations, elements, components, or combinations thereof.

Also, when a portion such as a layer, a film, an area, a plate, or the like is referred to as being "on" another portion, this includes not only the case in which the portion is "directly on" the another portion, but also the case in which still another portion is interposed therebetween. In contrast, when a portion such as a layer, a film, an area, a plate, or the like is referred to as being "below" another portion, this includes not only the case in which the portion is "directly below" the another portion, but also the case in which still another portion is interposed therebetween. In addition, to be disposed "on" in the present disclosure may include the case disposed at the lower portion as well as the upper portion.

Terms such as "first" and "second" may be used to describe various components, but the components should not be limited by the terms. The terms are used only for the purpose of distinguishing one component from another. For example, without departing from the scope of the present invention, a first component may be referred to as a second component, and similarly, the second component may also be referred to as the first component. Singular expressions include plural expressions unless the context clearly indicates otherwise.

In addition, the same reference numbers will be used throughout the drawings to refer to parts that perform similar functions or operations. In the case in which one part is said to be connected to another part in this disclosure, not only may the one part be directly connected to the other part, but also the one part may be indirectly connected to the other part via a further part. In addition, that a certain element is included does not mean that other elements are excluded, but means that such elements may be further included unless mentioned otherwise.

Hereinafter, an apparatus and a method for inspecting a coated electrode sheet for a secondary battery in accordance with the present invention will be described in detail with reference to the accompanying drawings.

An electrode sheet may have a structure in which an electrode mixture layer is coated on one side or both sides of a current collector layer.

The electrode mixture layer may be a slurry containing an active material, a binder, and a solvent, wherein the binder helps to hold the active material particles together and adhere them to the current collector layer. The active materials are components that undergo electrochemical reactions to store and release energy during the charge and discharge cycles in the secondary battery. For example, one or more of lithium cobalt oxide, lithium manganese oxide, lithium iron phosphate, nickel manganese, and nickel cobalt aluminum oxide may be used as a positive active material. For example, one or more of graphite, lithium titanate, and silicon-based materials may be used as a negative active material.

The current collector layer may be a thin metal foil designed to conduct electric current between an electrochemical active material and an external circuit of the battery. For example, an aluminum layer may be is used for the positive current collector, while a copper layer may be used for the negative current collector. An additional coating layer may be coated on the current collector layer to improve adhesion with the active materials, enhance corrosion resistance, or reduce electrical resistance.

The electrode mixture layer may be coated onto the current collector layer to the desired thickness in the desired area. The coated portion may be positioned in the middle of the electrode sheet along its width, and the uncoated portion may be positioned, e.g., at both sides of the coated portions. Various methods may be used for the coating process. For example, the slurry may be spread evenly across the surface of the current collector layer by a blade. The slurry may be extruded through a narrow slot die onto the moving current collector layer. The current collector may be dipped into the slurry and then withdrawn at a controlled speed. Otherwise, the slurry may be atomized and sprayed onto the current collector.

After coating the electrode mixture layer on the current collector layer, a process for increasing density of the coated electrode mixture layer is performed, typically being called a drying and pressing process. The process reduces the thickness of the electrode sheet to achieve the desired density, which enhances both the energy density and mechanical integrity of the electrode sheet. For example, a heavy roller with a heater may be used for pressing the electrode sheet. A pressure is to be exerted on the electrode sheet by the heavy roller during the process.

The apparatus for drying and pressing may include a pressure and heat exerting roller and a stage to support the electrode sheet thereon, so that the roller can roll and perform the drying and pressing process on the electrode sheet. Instead of the stage, however, the roller can be provided as a pair, so that the pair of rollers rotate with respect to each other having the electrode sheet sandwiched therebetween.

The thickness of so-manufactured coated electrode sheet is gauged before drying the coated electrode sheet by an inspection apparatus.

An x-ray or a beta ray may be used for gaging the thickness of the coated electrode sheet, because the method using the x-ray or the beta ray has advantages in that it is a non-contact and non-destructive method preserving the integrity of the target material. Thus, the method can be used for gaging the thickness of undried coated material. The gaging apparatus may have a source part for emitting a ray and detecting part for measuring the intensity of radiation pass through the target material. An x-ray tube or an x-ray generator may be used for x-ray emitting source, and Strontium-90 (Sr-90) or Krypton-85 (Kr-85) may be used for beta ray source material. For the detecting part, a scintillation detector or a semiconductor detector may be used for a x-ray detector, and a Geiger-Müller tube or a scintillation detector may be used for a beta ray detector.

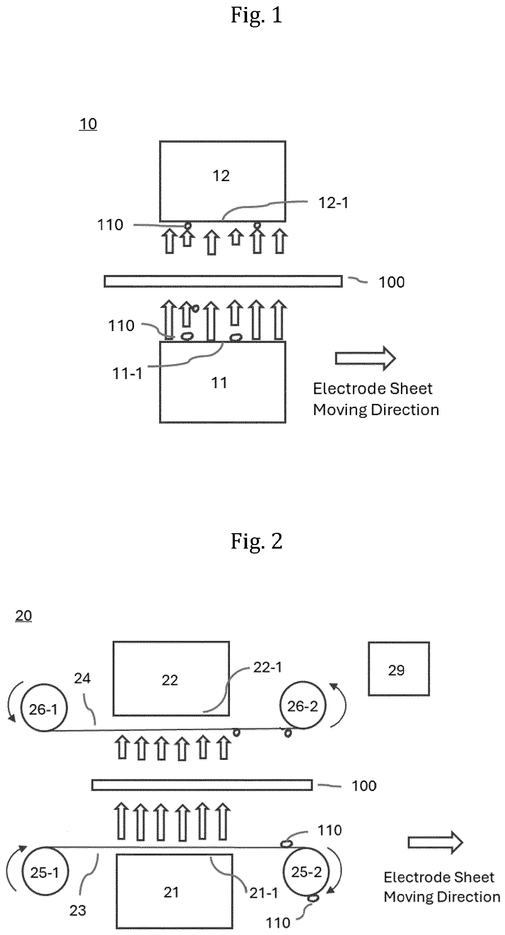

FIG. 1 schematically illustrates an exemplary apparatus 10 for inspecting a coated electrode sheet 100 for a secondary battery in accordance with the related art. The apparatus is designed to gauge a thickness of an electrode sheet 100 - or an amount of slurry coated on the electrode sheet 100 - while the coated electrode sheet 100 passes through the inspection apparatus 10.

Referring to Fig. 1, the inspection apparatus 10 includes a radiation emitting part 11 and a radiation detecting part 12. The inspection apparatus 10 is configured such that a coated electrode sheet 100 can pass between the radiation emitting part 11 and the radiation detecting part 12, to be parallel with the two surfaces of the radiation emitting part 11 and the radiation detecting part 12, facing each other. While the coated electrode sheet 100 passes, a predetermined amount of radiation is emitted from the radiation emitting part 11. Once the radiation passes through the electrode sheet 100, its intensity gets reduced. The change of radiation intensity may be different depending on the thickness of the electrode sheet 100 at the position the radiation has passed the electrode sheet 100. The inspection apparatus 10 is configured for gauging a thickness of the coating on the electrode sheet 100 by measuring the intensity of the radiation transmitted through the coated electrode sheet 100 at various positions thereof, and then converting the intensities obtained from various inspection positions to corresponding thicknesses of the coating at those positions on the electrode sheet 100.

Since, during the inspection, the electrode slurry on the electrode sheet 100 is still undried, foreign material particles of the electrode slurry may fall off from the electrode sheet 100 and attach to the surface of the inspection apparatus 10. Particularly, if the foreign material particles are deposited on the surface of the radiation emitting part 11 and the radiation detecting part 12 through which the radiation is either emitted or received, the contamination may cause inaccurate thickness inspection of the coated electrode sheet 100. In other words, if a foreign material 110 is deposited on a surface 11-1 of the radiation emitting part 11 through which the radiation is emitted towards the electrode sheet 100, or a surface 12-1 of the radiation detecting part 12 through which the radiation emitted by the radiation emitting part 11 and transmitted through the electrode sheet 100 is received, the intensity of the radiation transmitted through such contaminated positions would be reduced compared to other uncontaminated positions, due to the existence of the foreign material 110. Consequently, the accuracy of the thickness inspection of the coated electrode sheet 100 can be deteriorated.

In order to avoid the inaccurate thickness inspection resulting from the foreign material deposited on the inspection apparatus 10, an operator has to monitor and/or periodically perform maintenances on the inspection apparatus 10, particularly on the radiation emission surface 11-1 and the radiation reception surface 12-1. Because the inspection apparatus 10 must be on halt while the maintenance is carried out, a stoppage of the entire electrode sheet manufacturing process results. A frequent stoppage of the manufacturing process can have a negative influence on the throughput of the manufacturing process.

Fig. 2 schematically illustrates an apparatus 20 for inspecting a coated electrode sheet 100 for a secondary battery, in accordance with one embodiment of the present invention. The apparatus 20 may be configured to gauge a thickness of the coated electrode sheet 100 - or a thickness of the coating on the coated electrode sheet 100, to be exact.

The inspection apparatus 20, for example, may include a radiation emitting part 21 configured to emit a radiation towards the coated electrode sheet 100. An exemplary radiation to be used for the purpose of the present invention may include x-ray or beta ray. The inspection apparatus 20 may further include a radiation detecting part 22 disposed opposite the radiation emitting part 21, so that the two parts 21 and 22 face each other. Through the space formed between the radiation emitting part 21 and the radiation detecting part 22, the coated electrode sheet 100 may translate. The radiation detecting part 22 may detect an amount of the radiation having been emitted by the radiation emitting part 21 and transmitted through the coated electrode sheet 100. The detection may be made at multiple positions on the electrode sheet 100.

Based on the detected radiation amount, the thickness of the coated electrode sheet 100, or the thickness of the coating, at corresponding positions on the electrode sheet 100 may be obtained. For example, the radiation amount detected may be converted to a corresponding voltage signal and transmitted to a controller 29 for calculating the corresponding thickness of the electrode sheet 100, or the coating.

According to the embodiment of the present invention, the inspection apparatus 20 may further comprise a first protective layer 23, disposed between the coated electrode sheet 100 and the radiation emitting part 21, covering a surface 21-1 of the radiation emitting part 21 through which the radiation is emitted towards the coated electrode sheet 100.

The inspection apparatus 20 according to the present embodiment may preferably further comprise a second protective layer 24, disposed between the coated electrode sheet 100 and the radiation detecting part 22, covering a surface 22-1 of the radiation detecting part 22 through which the radiation transmitted through the coated electrode sheet 100 is received.

The first and/or the second protective layer 23, 24 is configured to prevent the radiation emission and/or reception surface 21-1 and/or 22-1 from being exposed to a foreign material 110 which may fall from the coating layer of the electrode sheet 110. The foreign material 110 may include a particle falling from an undried coating layer of the coated electrode sheet 110 or any other particle included in the processing environment, which can deposit on the radiation emission and/or reception surface 21-1 and/or 22-1.

The inspection apparatus 20 may be configured to inspect the thickness of the coated electrode sheet 100, on multiple positions thereof, while the coated electrode sheet 100 translates along its longitudinal direction (indicated as the moving direction in Fig. 2).

The first and/or the second protective layer 23, 24 may comprise a polyethylene terephthalate - PET - material. PET material can be made thin, light and uniform, so that the protective layer 23, 24 does not substantially affect the inspection accuracy of the inspection apparatus 20. However, the material of the first and/or the second protective layer 23, 24 should not be limited to PET material. Any material suitable for transmitting the radiation, e.g., x-ray or beta ray, may be used as the first and/or the second protective layer 23, 24. For example, the material of the first and/or the second protective layer may comprise a thermoplastic polymer. The material may comprise one or combination of Polyethylene Naphthalate (PEN), Polycarbonate (PC), Polyvinylidene Chloride (PVDC), Polyamide (Nylon), Polyethylene (PE), or Polylactic Acid (PLA).

The beta-ray may be preferred for real time inspection of the coated electrode sheet 100 in motion. The inspection apparatus 20 may inspect a coating amount in real time by using the beta ray for inspecting the coated electrode sheet 100. The coating amount is measured by detecting the radiation absorption rate emitted from the radioactive isotope emitted from the radiation emitting part 21. The greater the loading amount, the fewer beta particles, or electrons, reach the radiation detecting part 22. The radiation detecting part 22 may be an ionization chamber, filled with inert gas and connected to high voltage. An electrode in the chamber is connected to a sensitive amplifier and attracts the beta particles entering through the radiation reception surface 22-1 via the coated electrode sheet 100. By this reaction, the electric current is amplified and converted to a voltage in proportion to the number of beta particles entering the radiation detecting part 22.

Preferably, the first and/or the second protective layer 23, 24 may be respectively provided in the form of a foil roll. In this case, the inspection apparatus 20 may comprise a first start foil roll 25-1 from which the first protective layer 23 is unwound and supplied to the space between the emitting part 21 and the electrode sheet 100, to cover the radiation emission surface 21-1 of the radiation emitting part 21. The first protective layer 23 unwound from the first start foil roll 25-1 may be wound onto a first end foil roll 25-2. The first end foil roll 25-2 may be preferably positioned at the opposite side of the first start foil roll 25-1 with respect to the radiation emitting part 21.

The inspection apparatus 20 may further comprise a second start foil roll 26-1 from which the second protective layer 24 is unwound and supplied to the space between the radiation detecting part 22 and the electrode sheet 100, to cover the radiation reception surface 22-1 of the radiation detecting part 22. The second protective layer 24 unwound from the second start foil roll 26-1 may be wound onto a second end foil roll 26-2. The second end foil roll 26-2 may be preferably positioned at the opposite side of the second start foil roll 26-1 with respect to the radiation detecting part 22.

The inspection apparatus 20 may further include a controller 29. The controller 29 may be configured to relatively move the first and/or the second protective layer 23, 24 parallel to the radiation emission and/or the radiation reception surface 21-1 and/or 22-1, along the direction the electrode sheet 100 translates (i.e., the moving direction in Fig. 2). For example, the controller 29 may move the first and/or the second protective layer 23, 24 either at a predetermined constant speed or periodically by a preset length. The predetermined constant speed of the first and/or the second protective layer 23, 24 can be appropriately set in consideration of the amount of electrode sheet 100 becoming subject to the inspection operation by the inspection apparatus 20. In usual circumstances, the predetermined constant speed may be determined between one thousandth and one ten thousandth of a moving speed of the coated electrode sheet 100. In the meantime, the preset length may be set to correspond to a length of the coated electrode sheet 100 subject to the inspection operation by the inspection apparatus 20 at one time. In this way, the first and/or the second protective layer 23, 24 protecting the radiation emission and/or the radiation reception surface 21-1 and/or 22-1 from deposition of foreign materials can be constantly or periodically replaced by its own unused, clean part.

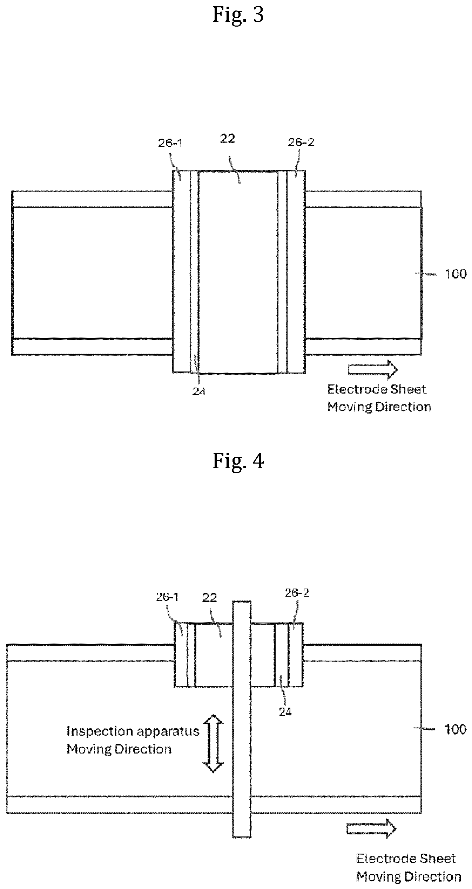

In accordance with one aspect of the present invention, the inspection apparatus 20 may be configured so as to have an inspection coverage sufficient to cover the entire width of the electrode sheet 100 (i.e., the length of the electrode sheet 100 along the direction perpendicular to its translation), as shown in Fig. 3. In this case, the inspection apparatus 20 can carry out the inspection operation over the entire width of the electrode sheet 100 in motion, having the radiation emitting and detecting parts 21, 22 fixed at their respective positions.

On the other hand, according to another aspect of the present invention as shown in Fig. 4, it is also possible for the inspection apparatus 20 to have a smaller inspection coverage, insufficient to cover the entire width of the electrode sheet 100 (i.e., the length of the electrode sheet 100 along the direction perpendicular to its translation). In this case, the inspection apparatus 20 may inspect only a portion of the entire width of the coated electrode sheet 100 at one time. The inspection apparatus 20 according to this aspect of the invention is, however, configured to cover the entire width of the electrode sheet 100, by moving back and forth along the width direction, between two lateral sides of the electrode sheet 100. This inspection apparatus shown in Fig. 4 may have an advantage of saving an installation space, nevertheless, without requiring an increased processing time for inspecting the coating amount of the electrode sheet 100.

A further aspect of the present invention relates to a method for inspecting a coated electrode sheet for a secondary battery. The method emits an x-ray or a beta ray towards an electrode sheet 100 by the radiation emitting part 21. An amount of the x-ray or the beta ray emitted and transmitted through the coated electrode sheet 100 is detected by the radiation detecting part 22. Based on the amount of the x-ray or the beta ray detected, the thickness of the coating can be calculated. According to the invention, while carrying out the inspection process, the first and/or the second protective layer 23, 24 moves parallel to the surface of the radiation emitting and/or detecting parts 21, 22, either at a predetermined constant speed or periodically by a preset length. In the meantime, the above-described respective steps may be simultaneously and continuously performed while the coated electrode sheet translates along its longitudinal direction.

The method for inspecting a coated electrode sheet may be performed while the coated electrode sheet 100 is still undried, prior to performing a roll-pressing step on the coated electrode sheet. At this state, foreign material particles of the undried coating layer may fall off from the coated electrode sheet and deposit on the surfaces of the inspection apparatus 20. According to the inspection method of the present invention, by employing the first and/or the second protective layer 23, 24, contamination of the inspection apparatus 20 by the foreign materials can be effectively prevented. Moreover, the constant or periodical movement of the first and/or the second protective layer 23, 24 can also minimize the frequency of maintenance of the inspection apparatus 20 by removing the necessity of maintenance works due to deposition of foreign materials on the surfaces of the apparatus 20.

Although specific embodiments have been illustrated and described herein, it will be appreciated by those of ordinary skill in the art that a variety of alternate and/or equivalent implementations exist. It should be appreciated that the exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

### LIST OF REFERENCE SIGNS

- 10, 20: inspection apparatus
- 11, 21: radiation emitting part
- 12, 22: radiation detecting part
- 11-1, 21-1: radiation emission surface
- 12-1, 22-1: radiation reception surface
- 23: first protective layer
- 24: second protective layer
- 25-1: first start foil roll
- 25-2: first end foil roll
- 26-1: second start foil roll
- 26-2: second end foil roll
- 29: controller
- 100: coated electrode sheet
- 110: foreign material

## Claims

1. An apparatus (10,20) for inspecting a coated electrode sheet (100) for a secondary battery, comprising:
a radiation emitting part (11, 21) configured to emit an x-ray or a beta ray towards the coated electrode sheet,
a radiation detecting part (12,22), disposed opposite the radiation emitting part (11,21) so as to have the coated electrode sheet (100) positioned therebetween, wherein the radiation detecting part (12,22) is configured to detect an amount of the x-ray or the beta ray emitted by the radiation emitting part (11,21) and transmitted through the coated electrode sheet (100), to thereby gauge the thickness of the coating, **characterized in that** the apparatus (10,20) for inspecting a coated electrode sheet (100) further comprises:
a first protective layer (23) disposed between the coated electrode sheet (100) and one of the radiation emitting and the radiation detecting parts (11,12,21,22) to cover a surface of said one of the radiation emitting and the radiation detecting parts (11,12,21,22) facing the coated electrode sheet (100),
a controller (29) configured to relatively move the first protective layer (23) parallel to said surface facing the coated electrode sheet (100), either at a predetermined constant speed or periodically by a preset length.

2. The apparatus of claim 1, further comprising a first roll from which the first protective layer is unwound and supplied between the coated electrode sheet and said one of the radiation emitting and the radiation detecting parts.

3. The apparatus of claim 1 or 2, further comprising a second protective layer disposed between the coated electrode sheet and the other one of the radiation emitting and the radiation detecting parts to cover a surface of the other one of the radiation emitting/detecting parts facing the coated electrode sheet,
wherein the controller is further configured to relatively move the second protective layer parallel to said surface of the other one of the radiation emitting and the radiation detecting parts facing the coated electrode sheet, either at a predetermined constant speed or periodically by a preset distance.

4. The apparatus of claim 3, further comprising a second roll from which the second protective layer is unwound and supplied between the coated electrode sheet and the other one of the radiation emitting and the radiation detecting parts.

5. The apparatus of any one of the preceding claims, wherein the first and/or the second protective layer comprises a polyethylene terephthalate - PET - material.

6. The apparatus of any one of the preceding claims,
wherein the radiation emitting and the radiation detecting parts are configured to inspect the coated electrode sheet while the coated electrode sheet translates along a longitudinal direction thereof.

7. The apparatus of claim 6,
wherein the controller is configured to move the first protective layer in the direction the coated electrode sheet translates.

8. The apparatus of claim 6 or 7,
wherein the controller is configured to move the second protective layer in the direction the coated electrode sheet translates.

9. The apparatus of any one of preceding claims, wherein the predetermined constant speed is between one thousandth and one ten thousandth of a moving speed of the coated electrode sheet.

10. A method for inspecting a coated electrode sheet (100) for a secondary battery by using the apparatus (10,20) of any one of claims 1 to 8, the method comprising:
1) emitting, by the radiation emitting part (11,21), an x-ray or a beta ray towards the coated electrode sheet (100),
2) detecting, by the radiation detecting part (12,22), an amount of the x-ray or the beta ray emitted and transmitted through the coated electrode sheet (100), so as to gauge the thickness of the coating,
3) relatively moving the first and/or the second protective layer (23,24) parallel to said surface of the radiation emitting and/or detecting parts (11,12,21,22), either at a predetermined constant speed or periodically by a preset length.

11. The method of claim 10, wherein the steps 1), 2) and 3) are performed simultaneously while the coated electrode sheet translates along a longitudinal direction thereof.

12. The method of claim 11, wherein the first and/or the second protective layer moves in the direction the coated electrode sheet translates.

13. The method of any one of claims 10 to 12, wherein the steps 1), 2) and 3) are performed while the coated electrode sheet is still undried and prior to performing a roll-pressing step on the coated electrode sheet.

## Patentansprüche

1. Vorrichtung (10, 20) zum Prüfen einer beschichteten Elektrodenbahn (100) für eine Sekundärbatterie, umfassend:
ein Strahlungsemissionsteil (11, 21), das dazu eingerichtet ist, einen Röntgenstrahl oder einen Betastrahl in Richtung auf die beschichtete Elektrodenbahn zu emittieren,
ein Strahlungsdetektionsteil (12, 22), das dem Strahlungsemissionsteil (11, 21) gegenüberliegend angeordnet ist, sodass die beschichtete Elektrodenbahn (100) dazwischen positioniert ist, wobei das Strahlungsdetektionsteil (12, 22) dazu eingerichtet ist, eine Menge des von dem Strahlungsemissionsteil (11, 21) emittierten und durch die beschichtete Elektrodenbahn (100) transmittierten Röntgenstrahls oder Betastrahls zu detektieren, um dadurch die Dicke der Beschichtung zu bestimmen,
**dadurch gekennzeichnet, dass** die Vorrichtung (10, 20) zum Prüfen einer beschichteten Elektrodenbahn (100) ferner umfasst:
eine erste Schutzschicht (23), die zwischen der beschichteten Elektrodenbahn (100) und einem Strahlungsemissions- oder Strahlungsdetektionsteil (11, 12, 21, 22) angeordnet ist, um eine Oberfläche des genannten Strahlungsemissions- oder Strahlungsdetektionsteils (11, 12, 21, 22), die der beschichteten Elektrodenbahn (100) zugewandt ist, abzudecken,
eine Steuerung (29), die dazu eingerichtet ist, die erste Schutzschicht (23) parallel zu der genannten, der beschichteten Elektrodenbahn (100) zugewandten Oberfläche, entweder mit einer vorbestimmten konstanten Geschwindigkeit oder periodisch um eine voreingestellte Länge, relativ zu bewegen.

2. Vorrichtung nach Anspruch 1, ferner umfassend eine erste Rolle, von der die erste Schutzschicht abgewickelt und zwischen der beschichteten Elektrodenbahn und dem genannten Strahlungsemissions- oder Strahlungsdetektionsteil zugeführt wird.

3. Vorrichtung nach Anspruch 1 oder 2, ferner umfassend eine zweite Schutzschicht, die zwischen der beschichteten Elektrodenbahn und dem jeweils anderen Strahlungsemissions- oder Strahlungsdetektionsteil angeordnet ist, um eine Oberfläche des jeweils anderen Strahlungsemissions- oder Strahlungsdetektionsteils, die der beschichteten Elektrodenbahn zugewandt ist, abzudecken,
wobei die Steuerung ferner dazu eingerichtet ist, die zweite Schutzschicht relativ zu bewegen, und zwar parallel zu der genannten Oberfläche des jeweils anderen Strahlungsemissions- oder Strahlungsdetektionsteils, die der beschichteten Elektrodenbahn zugewandt ist, entweder mit einer vorbestimmten konstanten Geschwindigkeit oder periodisch um eine voreingestellte Strecke.

4. Vorrichtung nach Anspruch 3, ferner umfassend eine zweite Rolle, von der die zweite Schutzschicht abgewickelt und zwischen der beschichteten Elektrodenbahn und dem jeweils anderen Strahlungsemissions- oder Strahlungsdetektionsteil zugeführt wird.

5. Vorrichtung nach einem der vorstehenden Ansprüche, wobei die erste und/oder die zweite Schutzschicht ein Polyethylenterephthalat-(PET)-Material umfasst.

6. Vorrichtung nach einem der vorstehenden Ansprüche,
wobei das Strahlungsemissionsteil und das Strahlungsdetektionsteil dazu eingerichtet sind, die beschichtete Elektrodenbahn zu prüfen, während sich die beschichtete Elektrodenbahn entlang ihrer Längsrichtung bewegt.

7. Vorrichtung nach Anspruch 6,
wobei die Steuerung dazu eingerichtet ist, die erste Schutzschicht in der Richtung zu bewegen, in der sich die beschichtete Elektrodenbahn bewegt.

8. Vorrichtung nach Anspruch 6 oder 7,
wobei die Steuerung dazu eingerichtet ist, die zweite Schutzschicht in der Richtung zu bewegen, in der sich die beschichtete Elektrodenbahn bewegt.

9. Vorrichtung nach einem der vorstehenden Ansprüche, wobei die vorbestimmte konstante Geschwindigkeit zwischen einem Tausendstel und einem Zehntausendstel einer Bewegungsgeschwindigkeit der beschichteten Elektrodenbahn liegt.

10. Verfahren zum Prüfen einer beschichteten Elektrodenbahn (100) für eine Sekundärbatterie unter Verwendung der Vorrichtung (10, 20) nach einem der Ansprüche 1 bis 8, wobei das Verfahren umfasst:
Emittieren eines Röntgenstrahls oder eines Betastrahls durch das Strahlungsemissionsteil (11, 21) in Richtung auf die beschichtete Elektrodenbahn (100),
Detektieren einer Menge des emittierten und durch die beschichtete Elektrodenbahn (100) transmittierten Röntgenstrahls oder Betastrahls durch das Strahlungsdetektionsteil (12, 22), um die Dicke der Beschichtung zu bestimmen,
relatives Bewegen der ersten und/oder der zweiten Schutzschicht (23, 24) parallel zu der genannten Oberfläche der Strahlungsemissions- und/oder Strahlungsdetektionsteile (11, 12, 21, 22), entweder mit einer vorbestimmten konstanten Geschwindigkeit oder periodisch um eine voreingestellte Länge.

11. Verfahren nach Anspruch 10, wobei die Schritte 1), 2) und 3) gleichzeitig durchgeführt werden, während sich die beschichtete Elektrodenbahn entlang ihrer Längsrichtung bewegt.

12. Verfahren nach Anspruch 11, wobei sich die erste und/oder die zweite Schutzschicht in der Richtung bewegt, in der sich die beschichtete Elektrodenbahn bewegt.

13. Verfahren nach einem der Ansprüche 10 bis 12, wobei die Schritte 1), 2) und 3) durchgeführt werden, während die beschichtete Elektrodenbahn noch ungetrocknet ist und bevor ein Walzpressschritt an der beschichteten Elektrodenbahn durchgeführt wird.

## Revendications

1. Dispositif (10, 20) pour l'inspection d'une feuille d'électrode revêtue (100) pour une batterie secondaire, comprenant :
une partie d'émission de rayonnement (11, 21) prévue pour émettre un rayonnement X ou un rayonnement bêta vers la feuille d'électrode revêtue,
une partie de détection de rayonnement (12, 22), disposée à l'opposé de la partie d'émission de rayonnement (11, 21), de sorte que la feuille d'électrode revêtue (100) est intercalée entre celles-ci, la partie de détection de rayonnement (12, 22) étant prévue pour détecter une quantité de rayonnement X ou de rayonnement bêta émise par la partie d'émission de rayonnement (11, 21) et transmise à travers la feuille d'électrode revêtue (100), afin de mesurer l'épaisseur du revêtement,
**caractérisé en ce que** ledit dispositif (10, 20) pour l'inspection d'une feuille d'électrode revêtue (100) comprend en outre :
une première couche protectrice (23) disposée entre la feuille d'électrode revêtue (100) et la partie d'émission de rayonnement ou la partie de détection de rayonnement (11, 12, 21, 22) de manière à recouvrir une surface de la partie d'émission de rayonnement ou de la partie de détection de rayonnement (11, 12, 21, 22) faisant face à la feuille d'électrode revêtue (100), un contrôleur (29) prévu pour déplacer de manière relative la première couche protectrice (23) parallèlement à la surface faisant face à la feuille d'électrode revêtue (100), soit à une vitesse constante prédéterminée, soit périodiquement sur une longueur prédéfinie.

2. Dispositif selon la revendication 1, comprenant en outre un premier rouleau à partir duquel la première couche protectrice est déroulée et avancée entre la feuille d'électrode revêtue et la partie d'émission de rayonnement ou la partie de détection de rayonnement.

3. Dispositif selon la revendication 1 ou la revendication 2, comprenant en outre une deuxième couche protectrice disposée entre la feuille d'électrode revêtue et l'autre partie entre la partie d'émission de rayonnement et la partie de détection de rayonnement, de manière à recouvrir une surface de l'autre partie entre la partie d'émission de rayonnement et la partie de détection de rayonnement faisant face à la feuille d'électrode revêtue,
le contrôleur étant en outre prévu pour déplacer de manière relative la deuxième couche protectrice parallèlement à la surface de l'autre partie entre la partie d'émission de rayonnement et la partie de détection de rayonnement faisant face à la feuille d'électrode revêtue, soit à une vitesse constante prédéterminée, soit périodiquement sur une distance prédéfinie.

4. Dispositif selon la revendication 3, comprenant en outre un deuxième rouleau à partir duquel la deuxième couche protectrice est déroulée et avancée entre la feuille d'électrode revêtue et l'autre partie entre la partie d'émission de rayonnement et la partie de détection de rayonnement.

5. Dispositif selon l'une des revendications précédentes, où la première et/ou la deuxième couche protectrice comprennent un matériau en polyéthylène téréphtalate - PET.

6. Dispositif selon l'une des revendications précédentes,
où les parties d'émission de rayonnement et de détection de rayonnement sont prévues pour inspecter la feuille d'électrode revêtue pendant le déplacement de la feuille d'électrode revêtue dans le sens de sa longueur.

7. Dispositif selon la revendication 6,
où le contrôleur est prévu pour déplacer la première couche protectrice dans la direction de translation de la feuille d'électrode revêtue.

8. Dispositif selon la revendication 6 ou la revendication 7,
où le contrôleur est prévu pour déplacer la deuxième couche protectrice dans la direction de translation de la feuille d'électrode revêtue.

9. Dispositif selon l'une des revendications précédentes, où la vitesse constante prédéterminée est comprise entre un millième et un dix-millième de la vitesse de déplacement de la feuille d'électrode revêtue.

10. Procédé d'inspection d'une feuille d'électrode revêtue (100) pour une batterie secondaire au moyen du dispositif (10, 20) selon l'une des revendications 1 à 8, ledit procédé comprenant :
1) l'émission, par la partie d'émission de rayonnement (11, 21), d'un rayonnement X ou d'un rayonnement bêta vers la feuille d'électrode revêtue (100),
2) la détection, par la partie de détection de rayonnement (12, 22), d'une quantité de rayonnement X ou de rayonnement bêta émise et transmise à travers la feuille d'électrode revêtue (100), afin de mesurer l'épaisseur du revêtement,
3) le déplacement de manière relative de la première et/ou de la deuxième couche protectrice (23, 24) parallèlement à la surface de la partie d'émission et/ou de la partie de détection de rayonnement (11, 12, 21, 22), soit à une vitesse constante prédéterminée, soit périodiquement sur une longueur prédéfinie.

11. Procédé selon la revendication 10, où les étapes 1), 2) et 3) sont exécutées simultanément pendant que la feuille d'électrode revêtue se déplace dans le sens de sa longueur.

12. Procédé selon la revendication 11, où la première et/ou la deuxième couche protectrice se déplace dans la direction de translation de la feuille d'électrode revêtue.

13. Procédé selon l'une des revendications 10 à 12, où les étapes 1), 2) et 3) sont exécutées alors que la feuille d'électrode enrobée n'est pas encore sèche et avant l'exécution d'une étape de pressage par rouleau sur la feuille d'électrode revêtue.
